# EUROPÄISCHE PATENTSCHRIFT

(11) **EP 1 723 087 B1**
(45) Veröffentlichungstag und Bekanntmachung des Hinweises auf die Patenterteilung: **12.11.2008**
(21) Anmeldenummer: 05707665.5
(22) Anmeldetag: 01.03.2005
(51) Int. Cl.: C03C 11/00

(54) **VERFAHREN ZUR HERSTELLUNG VON SCHAUMGLASGRANULAT**
METHOD FOR THE PRODUCTION OF A FOAMED GLASS GRANULATE
PROCEDE DE PRODUCTION DE GRANULES DE VERRE MOUSSE

(30) Priorität: 12.03.2004 DE 102004012598
(43) Veröffentlichungstag der Anmeldung: 22.11.2006
(73) Patentinhaber: DENNERT PORAVER GmbH, 92353 Postbauer-Heng (DE)
(72) Erfinder: DENNERT, Hans-Veit, 96132 Schlüsselfeld (DE)
(74) Vertreter: Hübner, Gerd
(86) Internationale Anmeldenummer: PCT/EP2005/002120
(87) Internationale Veröffentlichungsnummer: WO 2005/087676

(56) Entgegenhaltungen:
- EP-A- 0 678 482
- WO-A-03/055815
- GB-A- 1 224 030
- PATENT ABSTRACTS OF JAPAN Bd. 1997, Nr. 09, 30. September 1997 (1997-09-30) & JP 09 124327 A (ASAHI GLASS CO LTD), 13. Mai 1997 (1997-05-13)
- DATABASE WPI Section Ch, Week 200213 Derwent Publications Ltd., London, GB; Class L01, AN 2002-096160 XP002328199 & RU 2 176 219 C1 (ERMOLENKO V P) 27. November 2001 (2001-11-27)
- PATENT ABSTRACTS OF JAPAN Bd. 1999, Nr. 04, 30. April 1999 (1999-04-30) & JP 11 012056 A (NATL HOUSE IND CO LTD; TAKASAGO IND CO LTD), 19. Januar 1999 (1999-01-19)

## Beschreibung

Die Erfindung betrifft ein Verfahren zur Herstellung von Schaumglasgranulat.

Es ist beispielsweise aus der EP 0 678 482 A2 bekannt, Schaumglasgranulat herzustellen aus den RezepturKomponenten Glas - insbesondere Recyclingglas in Form von Behälter- und Fensterglas -, Wasserglas und einem Blähmittel wie beispielsweise Zucker oder Braunstein. Dabei wird das Glas aus einem vorgemahlenen oder vorgebrochenem Zustand durch Trockenmahlung beispielsweise in Kugelmühlen zu Glasmehl vermahlen. Dessen Partikelgröße liegt zwischen etwa 1 und 100 µm mit einer Größenverteilung, die typischerweise bei etwa 50 µm ein Maximum aufweist. Dieses Glasmehl wird zu einer wässrigen Glasbinderschlämpe aus Wasser, dem Blähmittel und Wasserglas als Bindemittel in einem Ansatzbehälter zudosiert und während einer gewissen Aufschlusszeit für die Glasbestandteile gerührt. Anschließend wird - in der Regel unter Zudosieren von weiterem Glasmehl oder Rückgut - der durch das Rühren gebildete Schlicker in einem Granuliermischer oder in einem Sprühturm zu Granulat-Grünkörpern granuliert und getrocknet. Diese Grünkörper werden schließlich beispielsweise in einem Drehrohrofen bei Temperaturen von typischerweise 800° bis 900° C verschäumt.

Grundsätzlich ist es im Zusammenhang mit der Herstellung von Schaumglasgranulat bekannt, dass die Eigenschaften der Granulatkörper erheblich sowohl von der Homogenität der Glasmehlpartikel als auch vom Aufschluss dieser Partikel durch den sogenannten hydrolytischen Angriff oder alkalischen Angriff durch die Bildung von Natronlauge aufgrund der hydrolytischen Wechselwirkung von Glas in Wasser oder durch die bereits - beispielsweise durch Wasserglas - in der wässrigen Glaslösung vorhandene Lauge abhängen. Bei diesem Aufschluss bilden sich an der Oberfläche der Glaspartikel Silanol-Gruppen, die - je nach Glasart unter Umständen auch mit Wassermolekülen angereichert - aufgrund ihres gelartigen Charakters als Silicagel-Schicht bezeichnet werden. Diese bildet einen wesentlichen Faktor für die Bindung der Glaspartikel in der Bindemittelmatrix untereinander und beeinflusst somit praktische Eigenschaften des Schaumglasgranulats, wie Festigkeit, gleichmäßige Porenverteilung innerhalb der einzelnen Granulate, Geschlossenheit und Dichtigkeit der Oberfläche.

In der Praxis sind verschiedenste Versuche zur Erzielung von Verbesserungen bekannt geworden, wie beispielsweise die Steigerung der Mahlfeinheit in dem Trockenmahlschritt, die Erhöhung der Verweilzeiten des kompletten Rohansatzes in einem Rührwerksbehälter, die Zugabe von heißem Wasser zum Rohansatz zur Erhöhung der Reaktivität usw. Dennoch bedarf es zur Optimierung von Schaumglasgranulat nach wie vor entsprechender Verbesserungen.

Der Erfindung liegt demzufolge die Aufgabe zugrunde, ein Verfahren zur Schaumglasgranulat-Herstellung anzugeben, dass mit anlagentechnisch geringerem Aufwand zu einem in seinen Eigenschaften erheblich verbesserten Produkt führt.

Diese Aufgabe wird durch die im Anspruch 1 angegebenen Verfahrensschritte wie folgt gelöst:
- Herstellen eines Rohansatzes aus den Rezepturkomponenten Wasser, vorgemahlenes oder vorgebrochenes Glas, Wasserglas und Blähmittel,
- Nassmahlen des Rohansatzes über mehrere Stunden zu einem Schlicker,
- Granulieren des Schlickers zu Granulat-Grünkörpern, und
- Verschäumen der Granulat-Grünkörper zu Schaumglasgranulat.

Grundsätzlich wird also von der im Stand der Technik praktizierten isolierten Trockenmahlung des Glasrohstoffes abgegangen und zu einer Nassmahlung des gesamten Rohansatzes der wesentlichen Rezepturkomponenten Wasser, Glas, Wasserglas und Blähmittel übergegangen. Überraschenderweise hat sich dabei gezeigt, dass die so produzierten Granulat-Grünkörper zu einem Schaumglasgranulat mit geringeren Schüttgewichten, höherer Festigkeit, gleichmäßigerer Porenverteilung innerhalb der einzelnen Granulatpartikel, einer geschlosseneren und dichteren Partikeloberfläche führen. Der Grund für diese umfassende Eigenschaftsverbesserung liegt in erster Linie in der durch die Nassmahlung erzielten Effekte einer homogeneren Mahlung bei gleichzeitiger Bildung einer wesentlich ausgeprägteren und dickeren Silicagel-Schicht an der Oberfläche der Schlickerpartikel. Es wird also ein deutlich verbesserter Aufschluss der Glaspartikel in einem kombinierten Mahl-Aufschluss-Vorgang erreicht. Gegenüber dem Stand der Technik wird also die getrennte Trockenmahlung der vorgebrochenen oder vorgemahlenen Glasprodukte und der anschließende Aufschluss in einem Rührwerksbehälter eingespart, was auch unter anlagentechnischen Aspekten zu einer Rationalisierung führt. Bei der Nassmahlung findet durch ein Abwälzen der Mahlhilfskugeln in der Mühle eine Scherung und Reibung des Mahlgutes bei gleichzeitigem hydrolytischen und alkalischen Angriff wegen in der Nassmühle ebenfalls vorhandenen Wasserglas-Zumischung. Dieser insgesamt als chemischer Angriff zu bezeichnende "Zersetzungsprozess" unterstützt das mechanische Zerkleinern der Glaspartikel. Ein weiterer Beitrag zur Verbesserung der Produkteigenschaften liegt darin, dass durch die Nassmahlung in den Schlickerpartikeln mehr Wasser gebunden wird, das zusätzlich zu dem in den Granulat-Grünkörpern noch als Restfeuchte vorhandenen freien Wasser beim Schäumprozess quasi als "Flussmittel" wirkt. Dies begünstigt ein früheres Auftreten von Schmelzphasen und damit ein feinporiges Einschließen der Reaktionsgase. Das eine Alkali-Silicat-Lösung darstellende Wasserglas dient neben seiner Funktion als Bindemittel bei der Granulierung bei erhöhter Temperatur - also wiederum beim Schäumen - ebenfalls als Flussmittel. Vorraussetzung ist hier allerdings das Vorhandensein von Wasser-Ionen, die ihrerseits eine schmelzbeschleunigende Wirkung bringen. Die aufgrund der Nassmahlung sehr reaktive Wasserglasmatrix führt weiterhin bei über 600° C während des Schäumprozesses zu einem verstärkten Anlösen und einem Ionenaustausch mit den Glaspartikeln, was unter anderem eine deutlich geringere Wasserlöslichkeit des geschäumten Schaumglases im Vergleich zum ursprünglichen Grünkorn bedingt.

In den Unteransprüchen sind bevorzugte Verfahrensparameter angegeben, zu deren Einzelheiten zur Vermeidung von Wiederholungen auf die nachfolgende Beschreibung eines Ausführungsbeispiels des erfindungsgemäßen Verfahrens verwiesen wird. In der beigefügten Zeichnung zeigen:
- Fig. 1: zeigt ein schematisches Ablaufdiagramm für ein Verfahren zur Schaumglasgranulat-Herstellung,
- Fig. 2 bzw. 3: Korngrößen-Verteilungsdiagramme von trocken- bzw. nassgemahlenen Schlickerpartikeln, und
- Fig. 4 bzw. 5: REM-Bilder von sprühgetrockneten Granulat-Grünkörpern auf der Basis von trockengemahlenen Glas bzw. nassgemahlenem Schlicker.

Bei dem erfindungsgemäßen Herstellungsverfahren wird von einem auf Halde 1 liegenden Recyclingglas-Gemisch aus Behälter- und Fensterglas ausgegangen, wobei jedoch auch andere Glasarten eingesetzt werden können. Dieses Recyclingglas wird über einen Beschicker 2 in einen Brecher 3 gegeben, wo es auf eine Partikelgröße von einigen Millimetern gebrochen wird. Dieses vorgebrochene Glas wird in einem Vorratssilo 4 zwischengelagert. In ähnlichen Silos 5, 6 lagern das pulverförmige Blähmittel, wie beispielsweise Zucker oder Braunstein, sowie gegebenenfalls Zusatzmaterialien, wie CaO, Al₂O₃, MgO oder B₂O₃, die gegebenenfalls als Netzwerksbildner für die Stabilisierung der Glasmatrix sorgen. In einem Vorratstank 7 wird das ebenfalls zum Rohansatz gehörende Natron-Silicat-Wasserglas vorgehalten.

In einer Mischeinheit 8 wird unter Wasserzugabe aus den vorstehenden Rezepturkomponenten ein Rohansatz hergestellt, der in eine Nassmühle 9 chargenweise - beispielsweise in Beladungen von beispielsweise einer Tonne - eingegeben wird.

Der Rohansatz ist bezogen auf die Trockenmasse der Rezepturkomponenten wie folgt zusammengesetzt:
83,5 bis 94,5 Gew.-% vorgebrochenes Glas,
5,0 bis 15,0 Gew.-% Wasserglas (Trockenanteil) und
0,5 bis 1,5 Gew.-% Blähmittel.

Unter "Trockenanteil" des Wasserglases sollen dessen festen Bestandteile verstanden werden, die in die vorstehende Trockenrezeptur eingerechnet werden. Das Wasserglas selbst ist Natrium-Silikat-Wasserglas und weist eine Feuchte von 50 - 80 %, vorzugsweise etwa 55 % auf.

Eine konkrete Rezeptur kann beispielsweise 93 Gew.-% vorgebrochenes Glas, 6 Gew.-% Wasserglas und 1 Gew.-% Blähmittel enthalten. Zwischenoxide aus dem Silo 6 können in Anteilen von 1 bis 10 Gew.-% auf Kosten des Glasanteils zugesetzt werden. Art und Umfang des Zwischenoxid-Zusatzes sind von der Art der anderen eingesetzten Rohstoffe abhängig und durch praktische Versuche ohne Weiteres ermittelbar.

Für die Nassmahlung wird der Rohansatz mit einer solchen Menge von Wasser versetzt, dass er eine Feuchte von 35 bis 45 % unter Einbeziehung des vom Wasserglas herrührenden Wasseranteils aufweist.

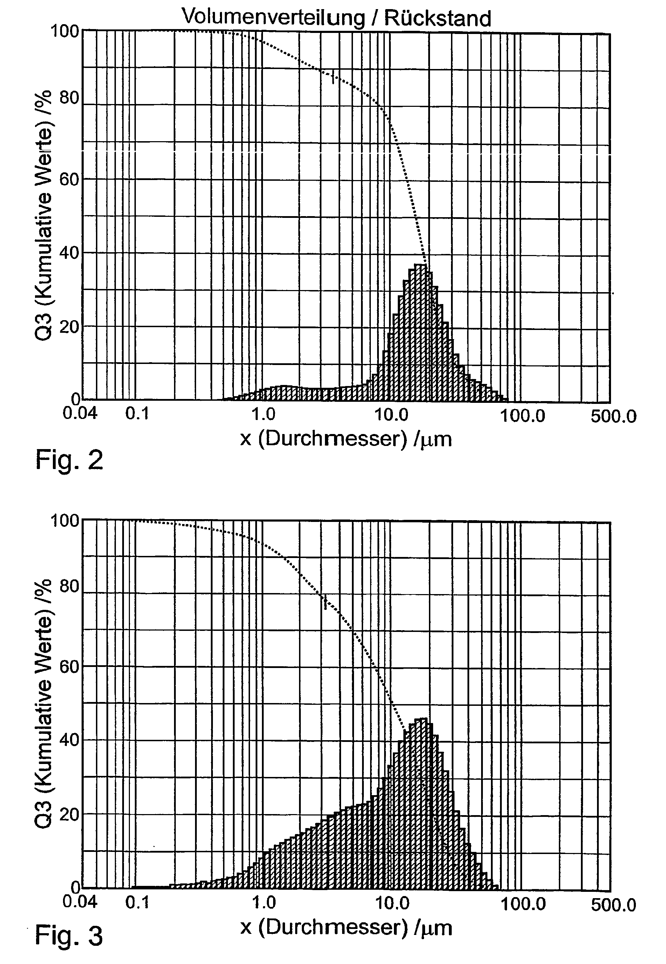

In der Nassmühle 9 wird dieser Rohansatz über vier Stunden gemahlen. Dabei ist festzustellen, dass aufgrund der mechanischen Zerstörung in Anwesenheit einer wässrigen alkalischen Lösung (Wasser und Wasserglas) im Überschuss bei gleichem Energieeinsatz gegenüber einen Trockenmahlung eine größere Feinheit des Mahlgutes erreicht wird beziehungsweise bei festgelegter Mahlfeinheit ein geringerer Energieeinsatz notwendig ist. Dies wird bestätigt durch entsprechende Korngrößenanalysen, wie sie in Fig. 2 und 3 wiedergegeben sind.

Fig. 2 zeigt die Korngrößenverteilung Q3 des Schlickers auf der Basis trocken gemahlenen Glasmehls in Abhängigkeit des Partikel-Durchmessers x. Die Histogramme weisen einen Verlauf ähnlich einer Gauß-Kurve mit dem Maximum bei etwa 20 µm auf.

In Fig. 3 ist eine entsprechende Verteilung bei einer Nassmahlung über sechs Stunden gezeigt. Der Anteil von Partikeln zwischen 1 und 10 µm ist gegenüber der Trockenmahlung bei etwa gleicher Lage des Maximums deutlich erhöht, sodass eine bessere Homogenität der Partikelmischung vorliegt. Der Grund für dieses verbesserte Mahlverhalten liegt darin, dass in die bei der mechanischen Belastung in den Glaspartikeln entstandenen Risse Hydrat-Ionen aus der alkalischen wässrigen Lösung eindringen, was durch die Bildung von Silanol-Gruppen zu Spannungen im Glas führt. Diese wiederum rufen schon bei einer geringeren mechanischen Krafteinleitung eine Zerstörung des Partikels hervor. Das alkalische wässrige Medium in der Nassmühle 9 wirkt also gewissermaßen als Mahlhilfsmittel. Da es - wie eingangs bereits erörtert - ferner für eine verstärkte Bildung der Silicagel-Schicht an der Partikeloberfläche sorgt, hat dieser Rezepturbestandteil eine typische Mehrfachfunktion, da es auch noch als Bindemittel und Flussmittel wirkt. Als Korridor für die Nassmahl-Zeit können im Übrigen vier bis zehn Stunden angegeben werden.

Von der Nassmühle 9 wird durch Druckluftbeaufschlagung der dort hergestellte Schlicker mit seiner Feuchte von 35 bis 45 % in einen Vorlagebehälter 10 gepumpt, der lediglich als Zwischenpuffer dient. Obwohl der Schlicker aufgrund seiner thixotropen Eigenschaften kaum zu Sedimentationen neigt, wird er zur Aufrechterhaltung seiner Homogenität durch ein Rührwerk 11 ständig leicht gerührt.

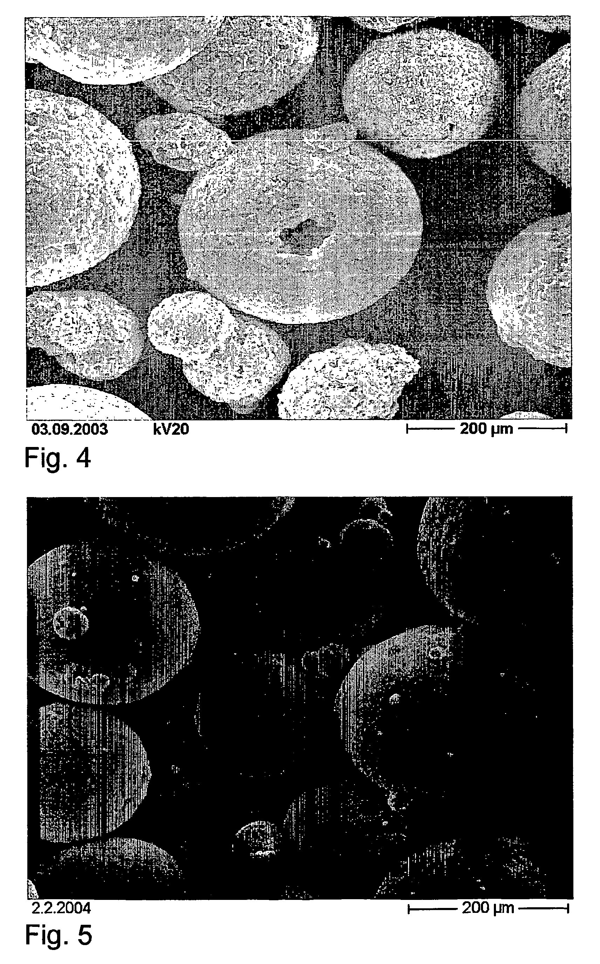

Vom Vorlage-Behälter 10 wird der Schlicker beispielsweise über einen Sprühturm 12 oder eine Wirbelschicht-Granulier-Einheit 13 zu Granulat-Grünkörpern granuliert. Diese weisen eine Restfeuchte von 0,1 bis 0,5 % freies Wasser auf. Auf eine Zugabe von trockenem Granulat-Rückgut, wie dies beim Stand der Technik vielmals bei der Granulierung auf einem Granulierteller oder in einem Granuliermischer durchgeführt wird, kann bei dem erfindungsgemäßen Herstellungsverfahren verzichtet werden. Natürlich kann der nassgemahlene Schlicker - wie der auf trockengemahlenem Glasgut basierende Schlicker - durch einen Granuliermischer unter Zudosierung von trockenem Rückgut zu Granulat-Grünkörpern verarbeitet werden. Allerdings werden mit dem durch Nassmahlung aufbereiteten Schlicker weitaus homogenere Granulat-Grünkörper durch die Sprühturmgranulierung erzielt, wie sich dies augenfällig aus einem Vergleich der Fig. 4 und 5 erkennen lässt. Fig. 4 ist ein REM-Bild von Granulat-Grünkörpern, die auf der Basis einer üblichen Trockenmahlung hergestellt wurden. Fig. 5 zeigt sprühgetrocknete Granulat-Grünkörper auf der Basis eines nassgemahlenen Schlickers gemäß der Erfindung. Die Oberfläche dieser Grünkörper ist deutlich geschlossener, homogener und glatter.

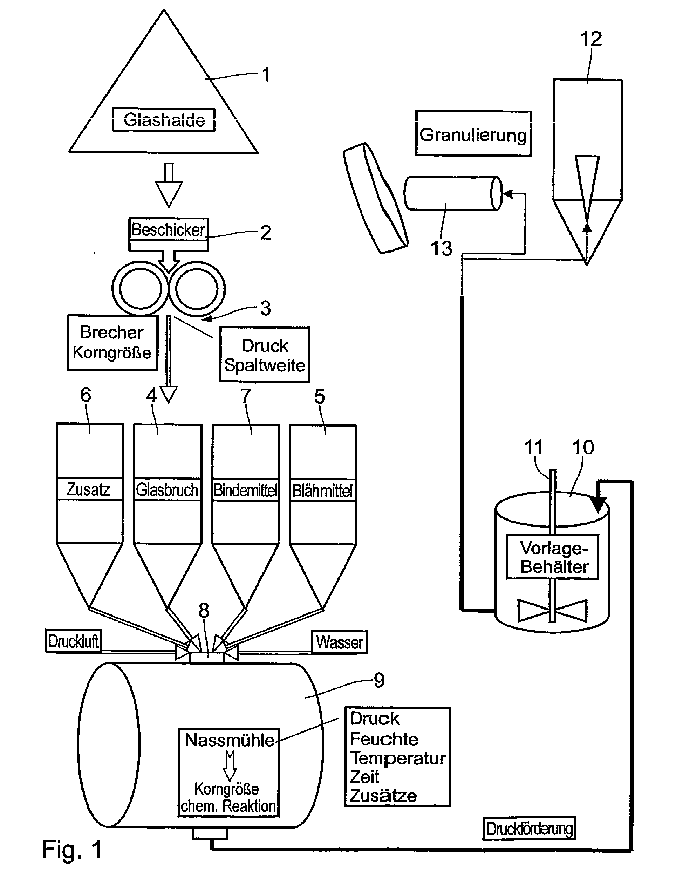

Wie in Fig. 1 nicht dargestellt ist, werden die in vorstehender Weise produzierten Granulat-Grünkörper in einem Drehrohrofen bei 800° bis 1000° C in völlig üblicher Weise zu Schaumglasgranulat-Partikel gebläht.

## Patentansprüche

1. Verfahren zur Herstellung von Schaumglasgranulat, **gekennzeichnet durch** folgende Verfahrensschritte:
- Herstellen eines Rohansatzes aus den Rezepturkomponenten Wasser, vorgemahlenes oder vorgebrochenes Glas, Wasserglas und Blähmittel,
- Nassmahlen des Rohansatzes über mehrere Stunden zu einem Schlicker,
- Granulieren des Schlickers zu Granulatgrünkörpern, und
- Verschäumen der Granulat-Grünkörper zu Schaumglasgranulat.

2. Verfahren nach Anspruch 1, **dadurch gekennzeichnet, dass** der Rohansatz bezogen auf die Trockenmasse der Rezepturkomponenten enthält
- 80 bis 98 Gew.-%, vorzugsweise 83,5 bis 94,5 Gew.-% vorgemahlenes oder vorgebrochenes Glas,
- 1,5 bis 17,0 Gew.-%, vorzugsweise 5,0 bis 15,0 Gew.-% Wasserglas (Trockenanteil) und
- 0,2 bis 3,0 Gew.-%, vorzugsweise 0,5 bis 1,5 Gew.-% Blähmittel.

3. Verfahren nach Anspruch 1 oder 2, **dadurch gekennzeichnet, dass** der Rohansatz und damit der Schlicker eine Feuchte von 25 - 60 %, vorzugsweise 35 - 45 % aufweisen.

4. Verfahren nach einem der vorgenannten Ansprüche, **dadurch gekennzeichnet, dass** die Nassmahl-Zeit bis zu 10 Stunden beträgt.

5. Verfahren nach einem der vorgenannten Ansprüche, **dadurch gekennzeichnet, dass** das Granulieren des Schlickers in einem Sprühturm (12) zu Granulat-Grünkörpern mit einer Restfeuchte von 0,1 bis 5,0 %, vorzugsweise 0,5 % freies Wasser vorzugsweise ohne Zugabe von trockenem Granulat-Rückgut erfolgt.

6. Verfahren nach einem der Ansprüche, **dadurch gekennzeichnet, dass** das Granulieren des Schlickers durch Wirbelschichtgranulierung (13) erfolgt.

7. Verfahren nach einem der vorgenannten Ansprüche, **dadurch gekennzeichnet, dass** dem Rohansatz CaO MgO, Al₂O₃ oder B₂O₃ vor dem Nassmahlen in einem Anteil von 1 bis 10 Gew.-% auf Kosten des Glasanteils zugesetzt werden.

8. Verfahren nach einem der vorgenannten Ansprüche, **dadurch gekennzeichnet, dass** der Rohansatz zu einem Schlicker mit einer Partikelgrößenbereich zwischen 0,5 und 100 µm nassgemahlen wird.

## Claims

1. Method of manufacturing foam glass pellets, **characterized by** following steps:
- producing a raw preparation from components including water, pre-milled or pre-crushed glass, waterglass and expanding agent;
- wet milling the raw preparation into slurry for several hours;
- pelletizing the slurry into green pellets; and
- foaming the green pellets into foam glass pellets.

2. Method according to claim 1, **characterized in that** related to a dry mass of the components, the raw preparation comprises
- 80 to 98 weight percent, preferably 83.5 to 94.5 weight percent, of pre-milled or pre-crushed glass;
- 1.5 to 17.0 weight percent, preferably 5.0 to 15.0 weight percent, of waterglass (dry percentage); and
- 0.2 to 3.0 weight percent, preferably 0.5 to 1.5 weight percent, of expanding agent.

3. Method according to claim 1 or 2, **characterized in that** the raw preparation and thus the slurry have a moisture of 25 to 60 percent, preferably of 35 to 45 percent.

4. Method according to one of the preceding claims, **characterized in that** a wet milling time period amounts to 10 hours.

5. Method according to one of the preceding claims, **characterized in that** pelletizing the slurry into green pellets of a residual free moisture of 0.1 to 5.0 percent, preferably 0.5 percent, takes place in a spray tower (12) preferably without the addition of dry return fines.

6. Method according to one of the claims, **characterized in that** pelletizing the slurry takes place by fluidized-bed pelletizing (13).

7. Method according to one of the preceding claims, **characterized in that** prior to wet milling, CaO, MgO, Al₂O₃ or B₂O₃, are added to the raw preparation in a percentage of 1 to 10 weight percent, replacing the glass portion.

8. Method according to one of the preceding claims, **characterized in that** the raw preparation is wet milled, forming a slurry of a range of particle size between 0.5 and 100 µm.

## Revendications

1. Procédé de production de granulés de verre mousse, **caractérisé par** les étapes suivantes du Procédé :
- production d'une pièce brute à partir des composants de formulation : eau, verre pré-broyé ou pré-concassé, verre soluble et agent moussant,
- broyage à l'état mouillé de la pièce brute sur plusieurs heures en une suspension,
- granulation de la suspension en corps vert de granulés, et
- moussage du corps vert de granulés en granulés de verre mousse.

2. Procédé selon la revendication 1, **caractérisé en ce que** la pièce brute contient, par rapport à la masse sèche des composants de la formulation :
- 80 à 98 % en poids, de préférence 83,5 à 94,5 % en poids de verre pré-broyé ou pré-concassé,
- 1,5 à 17,0 % en poids, de préférence 5,0 % à 15,0 % en poids de verre soluble (fraction sèche) et
- 0,2 à 0,3 % en poids, de préférence 0,5 à 1,5 % en poids d'agent moussant.

3. Procédé selon la revendication 1 ou 2, **caractérisé en ce que** la pièce brute et donc la suspension présentent une humidité de 25 à 60 %, de préférence, de 35 à 45 %.

4. Procédé selon l'une des revendications précédentes, **caractérisé en ce que** le temps de broyage à l'état mouillé va jusqu'à 10 heures.

5. Procédé selon l'une des revendications précédentes, **caractérisé en ce que** la granulation de la suspension dans une tour de pulvérisation (12) en corps verts de granulés s'effectue avec une humidité résiduelle de 0,1 à 5,0 %, de préférence 0,5 % d'eau libre, de préférence sans addition de produits de retour de granulés secs.

6. Procédé selon l'une des revendications précédentes, **caractérisé en ce que** la granulation de la suspension s'effectue par granulation en lit fluidisé (13).

7. Procédé selon l'une des revendications précédentes, **caractérisé en ce que** l'on ajoute à la pièce brute, du CaO, MgO, Al₂O₃ ou B₂O₃ avant le broyage à l'état mouillé en une proportion de 1 à 10 % en poids par rapport à la fraction de verre.

8. Procédé selon l'une des revendications précédentes, **caractérisé en ce que** la pièce brute est broyée à l'état mouillé en une suspension comportant un éventail de tailles de particules de 0,5 à 100 µm.
